# EUROPEAN PATENT SPECIFICATION

(11) **EP 3 258 726 B1**
(45) Date of publication and mention of the grant of the patent: **21.10.2020**
(21) Application number: 15883681.7
(22) Date of filing: 02.03.2015
(51) Int. Cl.: H04W 68/02

(54) **PAGING METHOD AND PAGING DEVICE**
FUNKRUFVERFAHREN UND FUNKRUFVORRICHTUNG
PROCÉDÉ DE RADIOMESSAGERIE ET DISPOSITIF DE RADIOMESSAGERIE

(43) Date of publication of application: 20.12.2017
(73) Proprietor: Huawei Technologies Co., Ltd., Longgang District Shenzhen, Guangdong 518129 (CN)
(72) Inventor: ZHANG, Chongming, Shenzhen Guangdong 518129 (CN); LUO, Chao, Shenzhen Guangdong 518129 (CN); LIU, Lei, Shenzhen Guangdong 518129 (CN)
(74) Representative: Thun, Clemens
(86) International application number: PCT/CN2015/073521
(87) International publication number: WO 2016/138624

(56) References cited:
- WO-A1-2014/178030
- WO-A1-2014/181981
- WO-A2-2014/188268
- WO-A2-2015/025296
- CN-A- 102 217 408
- CN-A- 104 159 300
- US-A1- 2012 300 685

## Description

### TECHNICAL FIELD

The present invention relates to the field of communications technologies, and in particular, to a paging method, a paging device, a computer-readable storage medium and to a computer program product.

### BACKGROUND

In a current communications system, when downlink data in a core network needs to be transmitted to user equipment (English: User Equipment, UE for short), a core network device starts a paging timer, and transmits a paging message to all base stations in a paging area, where the paging message carries a UE identifier.

When receiving the paging message, a base station in the paging area calculates, according to the UE identifier carried in the paging message, a nearest paging time point of UE corresponding to the UE identifier on an air interface, and when the paging time point comes, transmits the paging message to the UE corresponding to the UE identifier.

When receiving the paging message, the UE corresponding to the UE identifier transmits a paging response message to the core network device. Therefore, when receiving the paging response message, the core network device turns off the paging timer.

The UE can receive the paging message only at the paging time point, and the paging time point of the UE comes periodically. An example in which the UE is in the Global System for Mobile Communications (English: Global System for Mobile communication, GSM for short) is used: The paging time point of the UE corresponds to a series of Time Division Multiple Access (English: Time Division Multiple Access, TDMA for short) frame numbers. The TDMA frame numbers may be obtained through calculation according to an international mobile subscriber identifier (English: International Mobile Subscriber Identifier, IMSI for short) of the UE. For example, the TDMA frame numbers obtained through calculation are: a frame number 0, a frame number 100, a frame number 200, a frame number 300, a frame number 400, .... That is, paging time points of the UE respectively occur on the frame number 0, the frame number 100, the frame number 200, the frame number 300, the frame number 400, .... In addition, the TDMA frame numbers are not infinite. Assuming that an upper limit of the TDMA frame numbers is 1000, the paging time points of the UE respectively occur on the frame number 0, the frame number 100, the frame number 200, the frame number 300, the frame number 400, a frame number 500, a frame number 600, a frame number 700, a frame number 800, a frame number 900, and a frame number 1000, which occur cyclically.

Therefore, the calculating, by a base station when receiving the paging message and according to the UE identifier carried in the paging message, a nearest paging time point of UE corresponding to the UE identifier on an air interface specifically includes:
calculating, by the base station according to the UE identifier carried in the paging message, a paging time point of the UE corresponding to the UE identifier, and according to a radio frame number corresponding to a current time point and the calculated paging time point of the UE corresponding to the UE identifier, determining a paging time point nearest to the radio frame number corresponding to the current time point as the nearest paging time point of the UE corresponding to the UE identifier on the air interface.

The foregoing example is still used as an example for description. For example, if the radio frame number corresponding to the current time point is 108 and the calculated paging time point of the UE corresponding to the UE identifier includes the frame number 0, the frame number 100, the frame number 200, the frame number 300, the frame number 400, the frame number 500, the frame number 600, the frame number 700, the frame number 800, the frame number 900, and the frame number 1000, the obtained nearest paging time point of the UE corresponding to the UE identifier on the air interface is the frame number 200. That is, when a frame 200 arrives, the base station transmits the received paging message to the UE.

In practical application, when transmitting a paging message, a core network device starts a paging timer and waits for a paging response message transmitted by UE. However, when the paging timer expires and the core network device still does not receive the paging response message transmitted by the UE, in this case, the core network device has to retransmit the paging message.

In this way, in a paging process of the core network device, a function of the paging timer is weakened greatly, interface resources between a core network and a base station are wasted, and efficiency of paging performed by the core network device is reduced greatly.

WO 2014/188268 A2 discloses a method for paging optimization in a core network node of a wireless communication network, wherein the wireless communication network includes the core network node, an access network node and an user equipment, and the core network node keeps an active timer of the user equipment, the method comprises: the core network node receiving paging triggering indication; the core network node detecting the current state of the user equipment paged by the paging triggering indication; and the core network node sending a paging message and the remaining time of the active timer of the user equipment to the access network node when the user equipment is in idle state and the active timer of the user equipment kept by the core network node has been started. The method realizes an efficient utilization of the current communication resources to improve the success probability of the paging message sending. Furthermore, the remaining time of the active timer of the user equipment is sent to the access network node to ensure that the sequent paging sending can be optimized in the access network node.

### SUMMARY

In view of this, embodiments of the present invention provide a paging method, a paging device, a core network device, a base station, and a paging system to resolve an existing problem of low paging efficiency of a core network device.

The present invention is defined in the independent claims. Preferred embodiments are defined in the dependent claims.

According to a first aspect, a core network device is provided, including:
a signal transmitter, configured to transmit a paging message to at least one base station in a paging area, where the paging message includes an identifier of user equipment UE paged by the core network device;
a signal receiver, configured to receive a response message transmitted by the at least one base station, where the response message includes time information correlated with a paging time point of the UE and determined according to the identifier of the UE by the base station that transmits the response message, and the paging time point is a time point of receiving the paging message by the UE; and
a processor, configured to: according to the time information included in the response message received by the signal receiver, determine timing duration of a paging timer, and start the paging timer.

With reference to the first aspect, in a first possible implementation manner of the first aspect, if the time information included in the response message includes a nearest forthcoming paging time point of the UE, the determining, by the processor, timing duration of a paging timer specifically includes:
calculating a relative difference between the nearest forthcoming paging time point of the UE and a current time point; and
determining the timing duration of the paging timer according to a maximum relative difference obtained through calculation.

With reference to the first aspect, in a second possible implementation manner of the first aspect, if the time information included in the response message includes a relative difference between a nearest forthcoming paging time point of the UE and a time point of receiving the paging message by the base station that transmits the response message, the determining, by the processor, timing duration of a paging timer specifically includes:
determining a maximum relative difference according to the relative difference included in the received response message; and
determining the timing duration of the paging timer according to the maximum relative difference.

With reference to the first aspect, in a third possible implementation manner of the first aspect, if the time information included in the response message includes a relative difference interval between a nearest forthcoming paging time point of the UE and a time point of receiving the paging message by the base station that transmits the response message, the determining, by the processor, timing duration of a paging timer specifically includes:
determining a maximum relative difference in the relative difference interval according to the relative difference interval included in the received response message; and
determining the timing duration of the paging timer according to the maximum relative difference.

With reference to the first possible implementation manner of the first aspect, or the second possible implementation manner of the first aspect, or the third possible implementation manner of the first aspect, in a fourth possible implementation manner of the first aspect, the determining, by the processor, the timing duration of the paging timer according to the maximum relative difference specifically includes:
determining the maximum relative difference as the timing duration of the paging timer; or
adding a specified offset value to the maximum relative difference, and determining a value obtained after the specified offset value is added as the timing duration of the paging timer.

With reference to the first aspect, in a fifth possible implementation manner of the first aspect, if the time information included in the response message includes a paging cycle of the UE, the determining, by the processor, timing duration of a paging timer specifically includes:
determining a maximum paging cycle according to the paging cycle of the UE included in the received response message, where the paging cycle is used to represent a time difference between two adjacent occasions of receiving the paging message by the UE; and
determining the timing duration of the paging timer according to the maximum paging cycle.

With reference to the fifth possible implementation manner of the first aspect, in a sixth possible implementation manner of the first aspect, the determining, by the processor, the timing duration of the paging timer according to the maximum paging cycle specifically includes:
determining duration corresponding to the maximum paging cycle as the timing duration of the paging timer; or
adding a specified offset value to duration corresponding to the maximum paging cycle, and determining a value obtained after the specified offset value is added as the timing duration of the paging timer.

With reference to the first aspect, in a seventh possible implementation manner of the first aspect, if the time information included in the response message includes a paging cycle of the UE and a first current time point of a cell that is about to be accessed by the UE, where the first current time point is determined by the base station that transmits the response message, the determining, by the processor, timing duration of a paging timer specifically includes:
determining a nearest forthcoming paging time point of the UE in the base station according to the paging cycle of the UE and the first current time point of the cell that are included in the received response message, where the cell is about to be accessed by the UE and the first current time point is determined by the base station that transmits the response message, and the paging cycle is used to represent a time difference between two adjacent occasions of receiving the paging message by the UE; and
determining the timing duration of the paging timer according to the determined nearest forthcoming paging time point of the UE in the base station.

With reference to the seventh possible implementation manner of the first aspect, in an eighth possible implementation manner of the first aspect, the determining, by the processor, the timing duration of the paging timer according to the determined nearest forthcoming paging time point of the UE in the base station includes:
calculating a difference between the determined nearest forthcoming paging time point of the UE in the base station and a second current time point of the core network device; and
determining a maximum difference obtained through calculation as the timing duration of the paging timer.

According to a second aspect, a core network device is provided, including:
a signal receiver, configured to obtain a paging cycle of paged user equipment UE, where the paging cycle is used to represent a time difference between two adjacent occasions of receiving a paging message by the UE;
a processor, configured to determine timing duration of a paging timer according to the paging cycle of the UE; and
a signal transmitter, configured to: when downlink data arrives, trigger the processor to start the paging timer, and transmit the paging message to at least one base station in a paging area, where the paging message includes an identifier of the UE.

With reference to the second aspect, in a first possible implementation manner of the second aspect, the determining, by the processor, timing duration of a paging timer according to the paging cycle of the UE includes:
determining duration corresponding to the paging cycle as the timing duration of the paging timer; or
adding a specified offset value to duration corresponding to the paging cycle, and determining a value obtained after the specified offset value is added as the timing duration of the paging timer.

According to a third aspect, a base station is provided, including:
a signal receiver, configured to receive a paging message transmitted by a core network device, where the paging message includes an identifier of user equipment UE paged by the core network device;
a processor, configured to: according to the identifier of the UE, determine time information correlated with a paging time point of the UE, where the paging time point is a time point of receiving the paging message by the UE; and
a signal transmitter, configured to transmit a response message that carries the determined time information to the core network device, where the time information is used to determine timing duration of a paging timer of the core network device.

With reference to the third aspect, in a first possible implementation manner of the third aspect, the determining, by the processor according to the identifier of the UE, time information correlated with a paging time point of the UE includes:
determining a nearest forthcoming paging time point of the UE according to the identifier of the UE.

With reference to the third aspect or the first possible implementation manner of the third aspect, in a second possible implementation manner of the third aspect, the determining, by the processor according to the identifier of the UE, time information correlated with a paging time point of the UE includes:
determining, according to the identifier of the UE, a relative difference between the nearest forthcoming paging time point of the UE and a time point of receiving the paging message by the base station.

With reference to the third aspect, or the first possible implementation manner of the third aspect, or the second possible implementation manner of the third aspect, in a third possible implementation manner of the third aspect, the determining, by the processor according to the identifier of the UE, time information correlated with a paging time point of the UE includes:
determining, according to the identifier of the UE, a relative difference interval between the nearest forthcoming paging time point of the UE and the time point of receiving the paging message by the base station.

With reference to the third aspect, or the first possible implementation manner of the third aspect, or the second possible implementation manner of the third aspect, or the third possible implementation manner of the third aspect, in a fourth possible implementation manner of the third aspect, the determining, by the processor according to the identifier of the UE, time information correlated with a paging time point of the UE includes:
determining a paging cycle of the UE according to the identifier of the UE.

With reference to the third aspect, or the first possible implementation manner of the third aspect, or the second possible implementation manner of the third aspect, or the third possible implementation manner of the third aspect, or the fourth possible implementation manner of the third aspect, in a fifth possible implementation manner of the third aspect, the determining, by the processor according to the identifier of the UE, time information correlated with a paging time point of the UE includes:
determining, according to the identifier of the UE, the paging cycle of the UE and a first current time point of a cell that is about to be accessed by the UE, where the first current time point is determined by the base station.

According to a fourth aspect, a paging device is provided, where the paging device is applied to a core network device and includes:
a transmitting unit, configured to transmit a paging message to at least one base station in a paging area, where the paging message includes an identifier of user equipment UE paged by the core network device;
a receiving unit, configured to receive a response message transmitted by the at least one base station, where the response message includes time information correlated with a paging time point of the UE and determined according to the identifier of the UE by the base station that transmits the response message, and the paging time point is a time point of receiving the paging message by the UE; and
a determining unit, configured to: according to the time information included in the received response message, determine timing duration of a paging timer, and start the paging timer.

With reference to the fourth aspect, in a first possible implementation manner of the fourth aspect, if the time information included in the response message includes a nearest forthcoming paging time point of the UE, the determining, by the determining unit, timing duration of a paging timer specifically includes:
calculating a relative difference between the nearest forthcoming paging time point of the UE and a current time point; and
determining the timing duration of the paging timer according to a maximum relative difference obtained through calculation.

With reference to the fourth aspect, in a second possible implementation manner of the fourth aspect, if the time information included in the response message includes a relative difference between a nearest forthcoming paging time point of the UE and a time point of receiving the paging message by the base station that transmits the response message, the determining, by the determining unit, timing duration of a paging timer specifically includes:
determining a maximum relative difference according to the relative difference included in the received response message; and
determining the timing duration of the paging timer according to the maximum relative difference.

With reference to the fourth aspect, in a third possible implementation manner of the fourth aspect, if the time information included in the response message includes a relative difference interval between a nearest forthcoming paging time point of the UE and a time point of receiving the paging message by the base station that transmits the response message, the determining, by the determining unit, timing duration of a paging timer specifically includes:
determining a maximum relative difference in the relative difference interval according to the relative difference interval included in the received response message; and
determining the timing duration of the paging timer according to the maximum relative difference.

With reference to the first possible implementation manner of the fourth aspect, or the second possible implementation manner of the fourth aspect, or the third possible implementation manner of the fourth aspect, in a fourth possible implementation manner of the fourth aspect, the determining, by the determining unit, the timing duration of the paging timer according to the maximum relative difference specifically includes:
determining the maximum relative difference as the timing duration of the paging timer; or
adding a specified offset value to the maximum relative difference, and determining a value obtained after the specified offset value is added as the timing duration of the paging timer.

With reference to the fourth aspect, in a fifth possible implementation manner of the fourth aspect, if the time information included in the response message includes a paging cycle of the UE, the determining, by the determining unit, timing duration of a paging timer specifically includes:
determining a maximum paging cycle according to the paging cycle of the UE included in the received response message, where the paging cycle is used to represent a time difference between two adjacent occasions of receiving the paging message by the UE; and
determining the timing duration of the paging timer according to the maximum paging cycle.

With reference to the fifth possible implementation manner of the fourth aspect, in a sixth possible implementation manner of the fourth aspect, the determining, by the determining unit, the timing duration of the paging timer according to the maximum paging cycle specifically includes:
determining duration corresponding to the maximum paging cycle as the timing duration of the paging timer; or
adding a specified offset value to duration corresponding to the maximum paging cycle, and determining a value obtained after the specified offset value is added as the timing duration of the paging timer.

With reference to the fourth aspect, in a seventh possible implementation manner of the fourth aspect, if the time information included in the response message includes a paging cycle of the UE and a first current time point of a cell that is about to be accessed by the UE, where the first current time point is determined by the base station that transmits the response message, the determining, by the determining unit, timing duration of a paging timer specifically includes:
determining a nearest forthcoming paging time point of the UE in the base station according to the paging cycle of the UE and the first current time point of the cell that are included in the received response message, where the cell is about to be accessed by the UE and the first current time point is determined by the base station that transmits the response message, and the paging cycle is used to represent a time difference between two adjacent occasions of receiving the paging message by the UE; and
determining the timing duration of the paging timer according to the determined nearest forthcoming paging time point of the UE in the base station.

With reference to the seventh possible implementation manner of the fourth aspect, in an eighth possible implementation manner of the fourth aspect, the determining, by the determining unit, the timing duration of the paging timer according to the determined nearest forthcoming paging time point of the UE in the base station includes:
calculating a difference between the determined nearest forthcoming paging time point of the UE in the base station and a second current time point of the core network device; and
determining a maximum difference obtained through calculation as the timing duration of the paging timer.

According to a fifth aspect, a paging device is provided, including:
an obtaining unit, configured to obtain a paging cycle of paged user equipment UE, where the paging cycle is used to represent a time difference between two adjacent occasions of receiving a paging message by the UE;
a determining unit, configured to determine timing duration of a paging timer according to the paging cycle of the UE; and
a transmitting unit, configured to: when downlink data arrives, start the paging timer, and transmit the paging message to at least one base station in a paging area, where the paging message includes an identifier of the UE.

With reference to the fifth aspect, in a first possible implementation manner of the fifth aspect, the determining, by the determining unit, timing duration of a paging timer according to the paging cycle of the UE includes:
determining duration corresponding to the paging cycle as the timing duration of the paging timer; or
adding a specified offset value to duration corresponding to the paging cycle, and determining a value obtained after the specified offset value is added as the timing duration of the paging timer.

According to a sixth aspect, a paging device is provided, including:
a receiving unit, configured to receive a paging message transmitted by a core network device, where the paging message includes an identifier of user equipment UE paged by the core network device;
a determining unit, configured to: according to the identifier of the UE, determine time information correlated with a paging time point of the UE, where the paging time point is a time point of receiving the paging message by the UE; and
a transmitting unit, configured to transmit a response message that carries the determined time information to the core network device, where the time information is used to determine timing duration of a paging timer of the core network device.

With reference to the sixth aspect, in a first possible implementation manner of the sixth aspect, the determining, by the determining unit according to the identifier of the UE, time information correlated with a paging time point of the UE includes:
determining a nearest forthcoming paging time point of the UE according to the identifier of the UE.

With reference to the sixth aspect or the first possible implementation manner of the sixth aspect, in a second possible implementation manner of the sixth aspect, the determining, by the determining unit according to the identifier of the UE, time information correlated with a paging time point of the UE includes:
determining, according to the identifier of the UE, a relative difference between the nearest forthcoming paging time point of the UE and a time point of receiving the paging message by the paging device.

With reference to the sixth aspect, or the first possible implementation manner of the sixth aspect, or the second possible implementation manner of the sixth aspect, in a third possible implementation manner of the sixth aspect, the determining, by the determining unit according to the identifier of the UE, time information correlated with a paging time point of the UE includes:
determining, according to the identifier of the UE, a relative difference interval between the nearest forthcoming paging time point of the UE and the time point of receiving the paging message by the paging device.

With reference to the sixth aspect, or the first possible implementation manner of the sixth aspect, or the second possible implementation manner of the sixth aspect, or the third possible implementation manner of the sixth aspect, in a fourth possible implementation manner of the sixth aspect, the determining, by the determining unit according to the identifier of the UE, time information correlated with a paging time point of the UE includes:
determining a paging cycle of the UE according to the identifier of the UE.

With reference to the sixth aspect, or the first possible implementation manner of the sixth aspect, or the second possible implementation manner of the sixth aspect, or the third possible implementation manner of the sixth aspect, or the fourth possible implementation manner of the sixth aspect, in a fifth possible implementation manner of the sixth aspect, the determining, by the determining unit according to the identifier of the UE, time information correlated with a paging time point of the UE includes:
determining, according to the identifier of the UE, the paging cycle of the UE and a first current time point of a cell that is about to be accessed by the UE, where the first current time point is determined by the paging device.

According to a seventh aspect, a paging method is provided, including:
transmitting, by a core network device, a paging message to at least one base station in a paging area, where the paging message includes an identifier of user equipment UE paged by the core network device;
receiving, by the core network device, a response message transmitted by the at least one base station, where the response message includes time information correlated with a paging time point of the UE and determined according to the identifier of the UE by the base station that transmits the response message, and the paging time point is a time point of receiving the paging message by the UE; and
determining, by the core network device, timing duration of a paging timer according to the time information included in the received response message, and starting the paging timer.

With reference to the seventh aspect, in a first possible implementation manner of the seventh aspect, if the time information included in the response message includes a nearest forthcoming paging time point of the UE, the determining, by the core network device, timing duration of a paging timer specifically includes:
calculating, by the core network device, a relative difference between the nearest forthcoming paging time point of the UE and a current time point; and
determining, by the core network device, the timing duration of the paging timer according to a maximum relative difference obtained through calculation.

With reference to the seventh aspect, in a second possible implementation manner of the seventh aspect, if the time information included in the response message includes a relative difference between a nearest forthcoming paging time point of the UE and a time point of receiving the paging message by the base station that transmits the response message, the determining, by the core network device, timing duration of a paging timer specifically includes:
determining, by the core network device, a maximum relative difference according to the relative difference included in the received response message; and
determining, by the core network device, the timing duration of the paging timer according to the maximum relative difference.

With reference to the seventh aspect, in a third possible implementation manner of the seventh aspect, if the time information included in the response message includes a relative difference interval between a nearest forthcoming paging time point of the UE and a time point of receiving the paging message by the base station that transmits the response message, the determining, by the core network device, timing duration of a paging timer specifically includes:
determining, by the core network device, a maximum relative difference in the relative difference interval according to the relative difference interval included in the received response message; and
determining, by the core network device, the timing duration of the paging timer according to the maximum relative difference.

With reference to the first possible implementation manner of the seventh aspect, or the second possible implementation manner of the seventh aspect, or the third possible implementation manner of the seventh aspect, in a fourth possible implementation manner of the seventh aspect, the determining, by the core network device, the timing duration of the paging timer according to the maximum relative difference specifically includes:
determining, by the core network device, the maximum relative difference as the timing duration of the paging timer; or
adding, by the core network device, a specified offset value to the maximum relative difference, and determining a value obtained after the specified offset value is added as the timing duration of the paging timer.

With reference to the seventh aspect, in a fifth possible implementation manner of the seventh aspect, if the time information included in the response message includes a paging cycle of the UE, the determining, by the core network device, timing duration of a paging timer specifically includes:
determining, by the core network device, a maximum paging cycle according to the paging cycle of the UE included in the received response message, where the paging cycle is used to represent a time difference between two adjacent occasions of receiving the paging message by the UE; and
determining, by the core network device, the timing duration of the paging timer according to the maximum paging cycle.

With reference to the fifth possible implementation manner of the seventh aspect, in a sixth possible implementation manner of the seventh aspect, the determining, by the core network device, the timing duration of the paging timer according to the maximum paging cycle specifically includes:
determining, by the core network device, duration corresponding to the maximum paging cycle as the timing duration of the paging timer; or
adding, by the core network device, a specified offset value to duration corresponding to the maximum paging cycle, and determining a value obtained after the specified offset value is added as the timing duration of the paging timer.

With reference to the seventh aspect, in a seventh possible implementation manner of the seventh aspect, if the time information included in the response message includes a paging cycle of the UE and a first current time point of a cell that is about to be accessed by the UE, where the first current time point is determined by the base station that transmits the response message, the determining, by the core network device, timing duration of a paging timer specifically includes:
determining, by the core network device, a nearest forthcoming paging time point of the UE in the base station according to the paging cycle of the UE and the first current time point of the cell that are included in the received response message, where the cell is about to be accessed by the UE and the first current time point is determined by the base station that transmits the response message, and the paging cycle is used to represent a time difference between two adjacent occasions of receiving the paging message by the UE; and
determining, by the core network device, the timing duration of the paging timer according to the determined nearest forthcoming paging time point of the UE in the base station.

With reference to the seventh possible implementation manner of the seventh aspect, in an eighth possible implementation manner of the seventh aspect, the determining, by the core network device, the timing duration of the paging timer according to the determined nearest forthcoming paging time point of the UE in the base station includes:
calculating, by the core network device, a difference between the determined nearest forthcoming paging time point of the UE in the base station and a second current time point of the core network device; and
determining, by the core network device, a maximum difference obtained through calculation as the timing duration of the paging timer.

According to an eighth aspect, a paging method is provided, including:
obtaining, by a core network device, a paging cycle of paged user equipment UE, where the paging cycle is used to represent a time difference between two adjacent occasions of receiving a paging message by the UE;
determining, by the core network device, timing duration of a paging timer according to the paging cycle of the UE; and
starting, by the core network device, the paging timer when downlink data arrives, and transmitting the paging message to at least one base station in a paging area, where the paging message includes an identifier of the UE.

With reference to the eighth aspect, in a first possible implementation manner of the eighth aspect, the determining, by the core network device, timing duration of a paging timer according to the paging cycle of the UE includes:
determining, by the core network device, duration corresponding to the paging cycle as the timing duration of the paging timer; or
adding, by the core network device, a specified offset value to duration corresponding to the paging cycle, and determining a value obtained after the specified offset value is added as the timing duration of the paging timer.

According to a ninth aspect, a paging method is provided, including:
receiving, by a base station, a paging message transmitted by a core network device, where the paging message includes an identifier of user equipment UE paged by the core network device;
determining, by the base station according to the identifier of the UE, time information correlated with a paging time point of the UE, where the paging time point is a time point of receiving the paging message by the UE; and
transmitting, by the base station, a response message that carries the determined time information to the core network device, where the time information is used to determine timing duration of a paging timer of the core network device.

With reference to the ninth aspect, in a first possible implementation manner of the ninth aspect, the determining, by the base station according to the identifier of the UE, time information correlated with a paging time point of the UE includes:
determining, by the base station, a nearest forthcoming paging time point of the UE according to the identifier of the UE.

With reference to the ninth aspect or the first possible implementation manner of the ninth aspect, in a second possible implementation manner of the ninth aspect, the determining, by the base station according to the identifier of the UE, time information correlated with a paging time point of the UE includes:
determining, by the base station according to the identifier of the UE, a relative difference between the nearest forthcoming paging time point of the UE and a time point of receiving the paging message by the base station.

With reference to the ninth aspect, or the first possible implementation manner of the ninth aspect, or the second possible implementation manner of the ninth aspect, in a third possible implementation manner of the ninth aspect, the determining, by the base station according to the identifier of the UE, time information correlated with a paging time point of the UE includes:
determining, by the base station according to the identifier of the UE, a relative difference interval between the nearest forthcoming paging time point of the UE and the time point of receiving the paging message by the base station.

With reference to the ninth aspect, or the first possible implementation manner of the ninth aspect, or the second possible implementation manner of the ninth aspect, or the third possible implementation manner of the ninth aspect, in a fourth possible implementation manner of the ninth aspect, the determining, by the base station according to the identifier of the UE, time information correlated with a paging time point of the UE includes:
determining, by the base station, a paging cycle of the UE according to the identifier of the UE.

With reference to the ninth aspect, or the first possible implementation manner of the ninth aspect, or the second possible implementation manner of the ninth aspect, or the third possible implementation manner of the ninth aspect, or the fourth possible implementation manner of the ninth aspect, in a fifth possible implementation manner of the ninth aspect, the determining, by the base station according to the identifier of the UE, time information correlated with a paging time point of the UE includes:
determining, by the base station according to the identifier of the UE, the paging cycle of the UE and a first current time point of a cell that is about to be accessed by the UE, where the first current time point is determined by the base station.

In the embodiments of the present invention, a core network device transmits a paging message to at least one base station in a paging area, where the paging message includes an identifier of user equipment UE paged by the core network device; receives a response message transmitted by the at least one base station, where the response message includes time information correlated with a paging time point of the UE and determined according to the identifier of the UE by the base station that transmits the response message, and the paging time point is a time point of receiving the paging message by the UE; and determines, according to the time information included in the received response message, timing duration of a paging timer, and starts the paging timer. In this way, the core network device can accurately obtain the time information correlated with the paging time point of the UE, and a core network can properly configure the timing duration of the paging timer, thereby effectively ensuring that the paging message can be transmitted to the UE before the paging timer expires, greatly enhancing a function of the paging timer during paging, avoiding repeated transmitting of the paging message from the core network device, enhancing efficiency of paging performed by the core network device, and saving air interface resources.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic flowchart of a paging method according to the present invention;
FIG. 2 is a schematic flowchart of a paging method according to the present invention;
FIG. 3 is a schematic flowchart of a paging method according to the present invention;
FIG. 4 is a schematic structural diagram of a paging device according to the present invention;
FIG. 5 is a schematic structural diagram of a paging device according to the present invention;
FIG. 6 is a schematic structural diagram of a paging device according to the present invention;
FIG. 7 is a schematic structural diagram of a core network device according to the present invention;
FIG. 8 is a schematic structural diagram of a core network device according to the present invention;
FIG. 9 is a schematic structural diagram of a base station according to the present invention; and
FIG. 10 is a schematic structural diagram of a paging system according to the present invention.

### DESCRIPTION OF EMBODIMENTS

To fulfill objectives of the present invention, embodiments of the present invention provide a paging method, a paging device, a core network device, a base station, and a paging system. The core network device transmits a paging message to at least one base station in a paging area, where the paging message includes an identifier of user equipment UE paged by the core network device; receives a response message transmitted by the at least one base station, where the response message includes time information correlated with a paging time point of the UE and determined according to the identifier of the UE by the base station that transmits the response message, and the paging time point is a time point of receiving the paging message by the UE; and determines, according to the time information included in the response message, timing duration of a paging timer, and starts the paging timer. In this way, the core network device can accurately obtain the time information correlated with the paging time point of the UE, and a core network can properly configure the timing duration of the paging timer, thereby effectively ensuring that the paging message can be transmitted to the UE before the paging timer expires, greatly enhancing a function of the paging timer during paging, avoiding repeated transmitting of the paging message from the core network device, enhancing efficiency of paging performed by the core network device, and saving air interface resources.

The paging time point mentioned in the embodiments of the present invention may be a radio frame number, or may be a specific time point, or may be in another form. This is not limited herein.

The following further describes the embodiments of the present invention in detail with reference to the accompanying drawings of this specification. Apparently, the described embodiments are merely some but not all of the embodiments of the present invention. All other embodiments obtained by persons of ordinary skill in the art based on the embodiments of the present invention without creative efforts shall fall within the protection scope of the present invention.

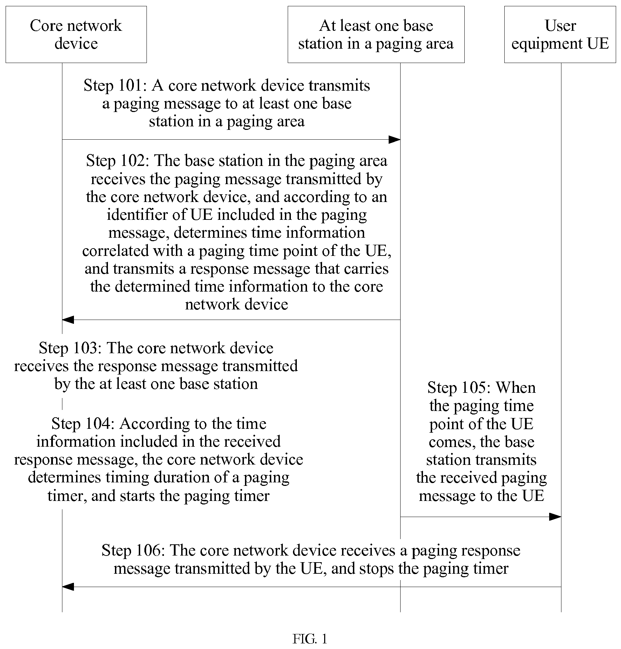

As shown in FIG. 1, FIG. 1 is a schematic flowchart of a paging method according to the present invention. The method may be described as follows.

Step 101: A core network device transmits a paging message to at least one base station in a paging area.

The paging message includes an identifier of UE paged by the core network device.

In step 101, the core network device transmits the paging message to a base station in the paging area of the core network device when downlink data needs to be transmitted to the UE.

The paging area refers to a geographic area, and the core network device transmits the paging message to a base station in the geographic area. For example, in a GSM system, the paging area mentioned herein may correspond to a routing area (English: Routing Area), or correspond to a location area (English: Location Area). In a Long Term Evolution (English: Long Term Evolution, LTE for short) system, the paging area mentioned herein may correspond to a tracking area (English: Tracking Area).

Generally, one or more base stations may exist in one paging area, and each base station includes multiple serving cells. Generally, a paging time point of the UE differs in different serving cells. That is, a determined paging time point of the UE in a serving cell 1 is different from a determined paging time point of the UE in a serving cell 2.

Step 102: The base station in the paging area receives the paging message transmitted by the core network device, and according to an identifier of UE included in the paging message, determines time information correlated with a paging time point of the UE, and transmits a response message that carries the determined time information to the core network device.

In step 102, a base station in the paging area is used as an example to describe a specific implementation manner of determining, by the base station according to the identifier of the UE included in the paging message, the time information correlated with the paging time point of the UE. The implementation manner of determining the time information by different base stations is similar, and is not repeatedly described herein.

Specifically, a first implementation manner is:
determining, by the base station, a nearest forthcoming paging time point of the UE according to the identifier of the UE.

It should be noted that if the base station includes multiple serving cells, the base station determines the nearest forthcoming paging time point of the UE for each serving cell. For example, assuming that the base station includes a serving cell 1, a serving cell 2, and a serving cell 3, a nearest forthcoming paging time point T1 of the UE in the serving cell 1 is determined, a nearest forthcoming paging time point T2 of the UE in the serving cell 2 is determined, and a nearest forthcoming paging time point T3 of the UE in the serving cell 3 is determined. That is, one base station may determine one or more nearest forthcoming paging time points of the UE. This is not limited herein.

A second implementation manner is:
determining, by the base station according to the identifier of the UE, a relative difference between a nearest forthcoming paging time point of the UE and a time point of receiving the paging message by the base station.

Specifically, according to the identifier of the UE, the base station determines the nearest forthcoming paging time point of the UE, and calculates the relative difference between the nearest forthcoming paging time point of the UE and the time point of receiving the paging message by the base station.

For example, according to the identifier of the UE, the base station determines that the nearest forthcoming paging time point of the UE is T1, and the time point of receiving the paging message by the base station is t. Therefore, the relative difference obtained through calculation is an absolute value of a difference between T1 and t. That is, the paging time point of the UE arrives after expiry of duration of (T1-t) that starts from the time point of receiving the paging message by the base station.

Herein it should be noted that if there are multiple determined nearest forthcoming paging time points of the UE, a quantity of relative differences obtained through calculation is not limited to 1.

A third implementation manner is:
determining, by the base station according to the identifier of the UE, a relative difference interval between a nearest forthcoming paging time point of the UE and a time point of receiving the paging message by the base station.

Specifically, according to the identifier of the UE, the base station determines the nearest forthcoming paging time point of the UE, and calculates a relative difference between the nearest forthcoming paging time point of the UE and the time point of receiving the paging message by the base station. According to the relative difference obtained through calculation, the base station determines the relative difference interval corresponding to the relative difference. That is, the paging time point of the UE arrives after expiry of duration corresponding to the relative difference interval, where the duration starts from the time point of receiving the paging message by the base station.

For example, a correspondence between the relative difference and the relative difference interval is preconfigured, and according to the correspondence and the relative difference obtained through calculation, the base station determines the relative difference interval corresponding to the relative difference.

For another example, it is preconfigured that a relative difference t1 corresponds to a relative difference interval [x seconds, y seconds]. When t1 is obtained by the base station through calculation, the relative difference interval [x seconds, y seconds] is determined. That is, the paging time point of the UE arrives after expiry of [x seconds, y seconds] that starts from the time point of receiving the paging message by the base station.

Herein it should be noted that, because the core network device can determine, according to a correspondence between a serial number and a relative difference interval, a relative difference interval corresponding to a serial number included in a received response message, a response message may include a determined relative difference interval and may further include a serial number corresponding to the relative difference interval, when the base station transmits the response message to a core network.

A fourth implementation manner is:
determining, by the base station, a paging cycle of the UE according to the identifier of the UE.

The paging cycle herein is used to represent a time difference between two adjacent occasions of receiving the paging message by the UE.

Specifically, the base station determines the paging time point of the UE according to the identifier of the UE, and obtains through calculation the paging cycle of the UE according to the determined paging time point of the UE.

For example, if determined paging time points of the UE occur on a frame number 0, a frame number 100, a frame number 200, a frame number 300, a frame number 400, a frame number 500, a frame number 600, a frame number 700, a frame number 800, a frame number 900, and a frame number 1000, the calculated paging cycle of the UE is 100 frames. That is, a paging time point of the UE arrives every 100 frames.

A fifth implementation manner is:
determining, by the base station according to the identifier of the UE, a paging cycle of the UE and a first current time point of a cell that is about to be accessed by the UE, where the first current time point is determined by the base station.

For example, the paging cycle of the UE obtained through calculation is 100 frames. That is, a paging time point of the UE arrives every 100 frames. The first current time point of the cell is the 108^{th} frame, where the cell is about to be accessed by the UE and the first current time point is determined by the base station.

Step 103: The core network device receives the response message transmitted by the at least one base station.

The response message includes time information correlated with a paging time point of the UE and determined according to the identifier of the UE by the base station that transmits the response message, where the paging time point is a time point of receiving the paging message by the UE.

In step 103, the core network device receives the response message transmitted by the at least one base station, where the response message includes the time information correlated with the paging time point of the UE and determined according to the identifier of the UE by the base station that transmits the response message, and the time information may be obtained in any implementation manner in the five implementation manners specified in step 102. This is not described in detail herein.

Step 104: According to the time information included in the received response message, the core network device determines timing duration of a paging timer, and starts the paging timer.

In step 104, if the time information included in the response message includes a nearest forthcoming paging time point of the UE, the determining, by the core network device, timing duration of a paging timer specifically includes:
calculating, by the core network device, a relative difference between the nearest forthcoming paging time point of the UE and a current time point; and
determining, by the core network device, the timing duration of the paging timer according to a maximum relative difference obtained through calculation.

It should be noted that if one relative difference is obtained through calculation, the relative difference obtained through calculation is regarded as the maximum relative difference. If at least two relative differences are obtained through calculation, a relative difference of a greatest value is selected from the relative differences obtained through calculation as the maximum relative difference.

Optionally, if the time information included in the response message includes a relative difference between a nearest forthcoming paging time point of the UE and a time point of receiving the paging message by the base station that transmits the response message, the determining, by the core network device, timing duration of a paging timer specifically includes:
determining, by the core network device, a maximum relative difference according to the relative difference included in the received response message; and
determining, by the core network device, the timing duration of the paging timer according to the maximum relative difference.

It should be noted that if one relative difference is received, the received relative difference is regarded as the maximum relative difference. If at least two relative differences are received, a relative difference of a greatest value is selected from the received relative differences as the maximum relative difference.

Optionally, if the time information included in the response message includes a relative difference interval between a nearest forthcoming paging time point of the UE and a time point of receiving the paging message by the base station that transmits the response message, the determining, by the core network device, timing duration of a paging timer specifically includes:
determining, by the core network device, a maximum relative difference in the relative difference interval according to the relative difference interval included in the received response message; and
determining, by the core network device, the timing duration of the paging timer according to the maximum relative difference.

It should be noted that if one relative difference interval is received, the timing duration of the paging timer is determined by using a maximum relative difference in the received relative difference interval. If at least two relative difference intervals are received, a relative difference of a greatest value is selected from the received relative difference intervals, and the timing duration of the paging timer is determined by using the selected maximum relative difference.

Specifically, the aforementioned determining, by the core network device, the timing duration of the paging timer according to the maximum relative difference specifically includes:
determining, by the core network device, the maximum relative difference as the timing duration of the paging timer; or
adding, by the core network device, a specified offset value to the maximum relative difference, and determining a value obtained after the specified offset value is added as the timing duration of the paging timer.

It should be noted that the specified offset value may be determined according to a transmission delay and/or a processing delay between the base station and the core network device, or may be determined in another manner. This is not limited herein.

Optionally, if the time information included in the response message includes a paging cycle of the UE, the determining, by the core network device, timing duration of a paging timer specifically includes:
determining, by the core network device, a maximum paging cycle according to the paging cycle of the UE included in the received response message, where the paging cycle is used to represent a time difference between two adjacent occasions of receiving the paging message by the UE; and
determining, by the core network device, the timing duration of the paging timer according to the maximum paging cycle.

It should be noted that if one paging cycle is received, the received paging cycle is regarded as the maximum paging cycle. If at least two paging cycles are received, a paging cycle of a greatest value is selected from the received paging cycles as the maximum paging cycle.

Specifically, the determining, by the core network device, the timing duration of the paging timer according to the maximum paging cycle specifically includes:
determining, by the core network device, duration corresponding to the maximum paging cycle as the timing duration of the paging timer; or
adding, by the core network device, a specified offset value to duration corresponding to the maximum paging cycle, and determining a value obtained after the specified offset value is added as the timing duration of the paging timer.

It should be noted that the specified offset value may be determined according to a transmission delay and/or a processing delay between the base station and the core network device, or may be determined in another manner. This is not limited herein.

Optionally, if the time information included in the response message includes a paging cycle of the UE and a first current time point of a cell that is about to be accessed by the UE, where the first current time point is determined by the base station that transmits the response message, the determining, by the core network device, timing duration of a paging timer specifically includes:
determining, by the core network device, a nearest forthcoming paging time point of the UE in the base station according to the paging cycle of the UE and the first current time point of the cell that are included in the received response message, where the cell is about to be accessed by the UE and the first current time point is determined by the base station that transmits the response message, and the paging cycle is used to represent a time difference between two adjacent occasions of receiving the paging message by the UE; and
determining, by the core network device, the timing duration of the paging timer according to the determined nearest forthcoming paging time point of the UE in the base station.

Specifically, the determining, by the core network device, the timing duration of the paging timer according to the determined nearest forthcoming paging time point of the UE in the base station includes:
calculating, by the core network device, a difference between the determined nearest forthcoming paging time point of the UE in the base station and a second current time point of the core network device; and
determining, by the core network device, a maximum difference obtained through calculation as the timing duration of the paging timer.

It should be noted that if one nearest forthcoming paging time point of the UE in the base station is determined, the difference obtained through calculation is regarded as the maximum difference. If at least two nearest forthcoming paging time points of the UE in the base station are determined, a difference between each determined nearest forthcoming paging time point of the UE in the base station and the second current time point of the core network device is calculated, and a difference of a greatest value is selected from the multiple differences obtained through calculation as the maximum difference.

It should be noted that time information included in a response message transmitted by each base station may be time information of a different type. For example, not all time information included in response messages transmitted by all base stations is a paging cycle of the UE, or is a nearest forthcoming paging time point of the UE in each base station. Therefore, in determining the timing duration of the paging timer, the time information of different types may be converted into time information of a same type and then subsequent calculation is performed.

Step 105: When the paging time point of the UE comes, the base station transmits the received paging message to the UE.

Step 106: The core network device receives a paging response message transmitted by the UE, and stops the paging timer.

Optionally, upon expiration of duration of the paging timer, if the core network device still does not receive the paging response message transmitted by the UE, the core network device determines to retransmit the paging message or discard the downlink data.

It should further be noted that one UE is used as an example for description in this embodiment of the present invention, and the foregoing manner is applicable to paging for different UEs, and no details are repeated herein.

According to the solution in this embodiment of the present invention, a core network device transmits a paging message to at least one base station in a paging area, where the paging message includes an identifier of user equipment UE paged by the core network device; receives a response message transmitted by the at least one base station, where the response message includes time information correlated with a paging time point of the UE and determined according to the identifier of the UE by the base station that transmits the response message, and the paging time point is a time point of receiving the paging message by the UE; and determines, according to the time information included in the received response message, timing duration of a paging timer, and starts the paging timer. In this way, the core network device can accurately obtain the time information correlated with the paging time point of the UE, and a core network can properly configure the timing duration of the paging timer, thereby effectively ensuring that the paging message can be transmitted to the UE before the paging timer expires, greatly enhancing a function of the paging timer during paging, avoiding repeated transmitting of the paging message from the core network device, enhancing efficiency of paging performed by the core network device, and saving air interface resources.

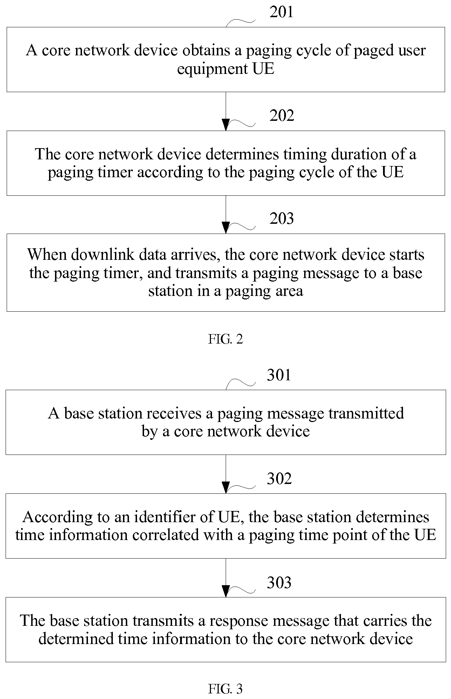

FIG. 2 is a schematic flowchart of a paging method according to an embodiment of the present invention. The method may be described as follows.

Step 201: A core network device obtains a paging cycle of paged user equipment UE.

The paging cycle is used to represent a time difference between two adjacent occasions of receiving a paging message by the UE.

In step 201, the paging cycle of the paged UE, which is obtained by the core network device, may be directly transmitted by the UE to the core network device, or may be calculated and transmitted by a base station to the core network device, where the base station is a base station that serves a serving cell of the UE. This is not limited herein.

Step 202: The core network device determines timing duration of a paging timer according to the paging cycle of the UE.

In step 202, the determining, by the core network device, duration of a paging timer according to the paging cycle of the UE includes:
determining, by the core network device, duration corresponding to the paging cycle as the timing duration of the paging timer; or
adding, by the core network device, a specified offset value to duration corresponding to the paging cycle, and determining a value obtained after the specified offset value is added as the timing duration of the paging timer.

It should be noted that the specified offset value may be determined according to a transmission delay and/or a processing delay between the base station and the core network device, or may be determined in another manner. This is not limited herein.

Step 203: When downlink data arrives, the core network device starts the paging timer, and transmits a paging message to a base station in a paging area.

The paging message includes an identifier of the UE.

FIG. 3 is a schematic flowchart of a paging method according to an embodiment of the present invention. The method may be described as follows.

Step 301: Abase station receives a paging message transmitted by a core network device.

The paging message includes an identifier of user equipment UE paged by the core network device.

Step 302: According to the identifier of the UE, the base station determines time information correlated with a paging time point of the UE.

The paging time point is a time point of receiving the paging message by the UE.

In step 302, the determining, by the base station according to the identifier of the UE, time information correlated with a paging time point of the UE includes the following manners:
A first manner is:
   determining, by the base station, a nearest forthcoming paging time point of the UE according to the identifier of the UE.
A second manner is:
   determining, by the base station according to the identifier of the UE, a relative difference between a nearest forthcoming paging time point of the UE and a time point of receiving the paging message by the base station that transmits the response message.
A third manner is:
   determining, by the base station according to the identifier of the UE, a relative difference interval between a nearest forthcoming paging time point of the UE and a time point of receiving the paging message by the base station that transmits the response message.
A fourth manner is:
   determining, by the base station, a paging cycle of the UE according to the identifier of the UE.
A fifth manner is:
   determining, by the base station according to the identifier of the UE, a paging cycle of the UE and a first current time point of a cell that is about to be accessed by the UE, where the first current time point is determined by the base station that transmits the response message.

Step 303: The base station transmits a response message that carries the determined time information to the core network device.

The time information is used to determine timing duration of a paging timer of the core network device.

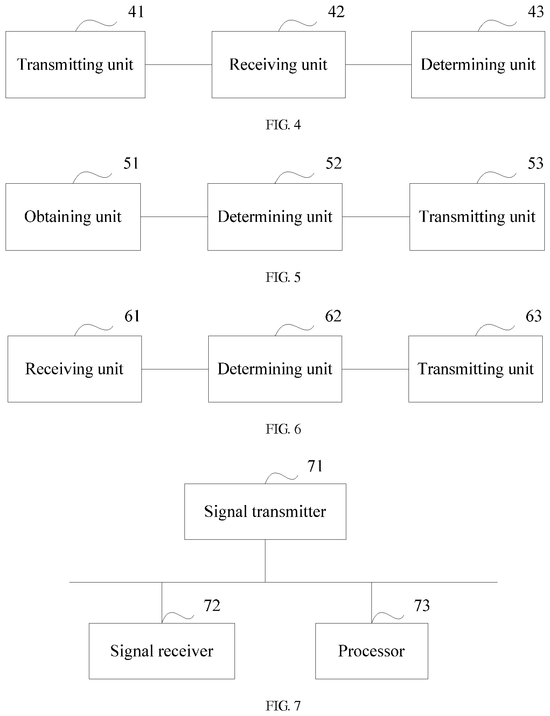

As shown in FIG. 4, FIG. 4 is a schematic structural diagram of a paging device according to an embodiment of the present invention. The paging device is applied to a core network device. The paging device includes: a transmitting unit 41, a receiving unit 42, and a determining unit 43.

The transmitting unit 41 is configured to transmit a paging message to at least one base station in a paging area, where the paging message includes an identifier of user equipment UE paged by the core network device.

The receiving unit 42 is configured to receive a response message transmitted by the at least one base station, where the response message includes time information correlated with a paging time point of the UE and determined according to the identifier of the UE by the base station that transmits the response message, and the paging time point is a time point of receiving the paging message by the UE.

The determining unit 43 is configured to: according to the time information included in the received response message, determine timing duration of a paging timer, and start the paging timer.

Optionally, if the time information included in the response message includes a nearest forthcoming paging time point of the UE, the determining, by the determining unit 43, timing duration of a paging timer specifically includes:
calculating a relative difference between the nearest forthcoming paging time point of the UE and a current time point; and
determining the timing duration of the paging timer according to a maximum relative difference obtained through calculation.

Optionally, if the time information included in the response message includes a relative difference between a nearest forthcoming paging time point of the UE and a time point of receiving the paging message by the base station that transmits the response message, the determining, by the determining unit 43, timing duration of a paging timer specifically includes:
determining a maximum relative difference according to the relative difference included in the received response message; and
determining the timing duration of the paging timer according to the maximum relative difference.

Optionally, if the time information included in the response message includes a relative difference interval between a nearest forthcoming paging time point of the UE and a time point of receiving the paging message by the base station that transmits the response message, the determining, by the determining unit 43, timing duration of a paging timer specifically includes:
determining a maximum relative difference in the relative difference interval according to the relative difference interval included in the received response message; and
determining the timing duration of the paging timer according to the maximum relative difference.

Optionally, the determining, by the determining unit 43, the timing duration of the paging timer according to the maximum relative difference specifically includes:
determining the maximum relative difference as the timing duration of the paging timer; or
adding a specified offset value to the maximum relative difference, and determining a value obtained after the specified offset value is added as the timing duration of the paging timer.

Optionally, if the time information included in the response message includes a paging cycle of the UE, the determining, by the determining unit 43, timing duration of a paging timer specifically includes:
determining a maximum paging cycle according to the paging cycle of the UE included in the received response message, where the paging cycle is used to represent a time difference between two adjacent occasions of receiving the paging message by the UE; and
determining the timing duration of the paging timer according to the maximum paging cycle.

Optionally, the determining, by the determining unit 43, the timing duration of the paging timer according to the maximum paging cycle specifically includes:
determining duration corresponding to the maximum paging cycle as the timing duration of the paging timer; or
adding a specified offset value to duration corresponding to the maximum paging cycle, and determining a value obtained after the specified offset value is added as the timing duration of the paging timer.

Optionally, if the time information included in the response message includes a paging cycle of the UE and a first current time point of a cell that is about to be accessed by the UE, where the first current time point is determined by the base station that transmits the response message, the determining, by the determining unit 43, timing duration of a paging timer specifically includes:
determining a nearest forthcoming paging time point of the UE in the base station according to the paging cycle of the UE and the first current time point of the cell that are included in the received response message, where the cell is about to be accessed by the UE and the first current time point is determined by the base station that transmits the response message, and the paging cycle is used to represent a time difference between two adjacent occasions of receiving the paging message by the UE; and
determining the timing duration of the paging timer according to the determined nearest forthcoming paging time point of the UE in the base station.

Optionally, the determining, by the determining unit 43, the timing duration of the paging timer according to the determined nearest forthcoming paging time point of the UE in the base station includes:
calculating a difference between the determined nearest forthcoming paging time point of the UE in the base station and a second current time point of the core network device; and
determining a maximum difference obtained through calculation as the timing duration of the paging timer.

It should be noted that the paging device described in this embodiment of the present invention may be implemented in a hardware manner or in a software manner. This is not limited herein.

FIG. 5 is a schematic structural diagram of a paging device according to an embodiment of the present invention. The paging device may be integrated in a core network device. The paging device includes: an obtaining unit 51, a determining unit 52, and a transmitting unit 53.

The obtaining unit 51 is configured to obtain a paging cycle of paged user equipment UE, where the paging cycle is used to represent a time difference between two adjacent occasions of receiving a paging message by the UE.

The determining unit 52 is configured to determine timing duration of a paging timer according to the paging cycle of the UE.

The transmitting unit 53 is configured to: when downlink data arrives, start the paging timer, and transmit the paging message to at least one base station in a paging area, where the paging message includes an identifier of the UE.

Optionally, the determining, by the determining unit 52, timing duration of a paging timer according to the paging cycle of the UE includes:
determining duration corresponding to the paging cycle as the timing duration of the paging timer; or
adding a specified offset value to duration corresponding to the paging cycle, and determining a value obtained after the specified offset value is added as the timing duration of the paging timer.

It should be noted that the paging device described in this embodiment of the present invention may be implemented in a hardware manner or in a software manner. This is not limited herein.

FIG. 6 is a schematic structural diagram of a paging device according to an embodiment of the present invention. The paging device may be integrated in a base station. The paging device includes: a receiving unit 61, a determining unit 62, and a transmitting unit 63.

The receiving unit 61 is configured to receive a paging message transmitted by a core network device, where the paging message includes an identifier of user equipment UE paged by the core network device.

The determining unit 62 is configured to: according to the identifier of the UE, determine time information correlated with a paging time point of the UE, where the paging time point is a time point of receiving the paging message by the UE.

The transmitting unit 63 is configured to transmit a response message that carries the determined time information to the core network device, where the time information is used to determine timing duration of a paging timer of the core network device.

Optionally, the determining, by the determining unit 62 according to the identifier of the UE, time information correlated with a paging time point of the UE includes:
determining a nearest forthcoming paging time point of the UE according to the identifier of the UE.

Optionally, the determining, by the determining unit 62 according to the identifier of the UE, time information correlated with a paging time point of the UE includes:
determining, according to the identifier of the UE, a relative difference between a nearest forthcoming paging time point of the UE and a time point of receiving the paging message by the paging device.

Optionally, the determining, by the determining unit 62 according to the identifier of the UE, time information correlated with a paging time point of the UE includes:
determining, according to the identifier of the UE, a relative difference interval between a nearest forthcoming paging time point of the UE and a time point of receiving the paging message by the paging device.

Optionally, the determining, by the determining unit 62 according to the identifier of the UE, time information correlated with a paging time point of the UE includes:
determining a paging cycle of the UE according to the identifier of the UE.

Optionally, the determining, by the determining unit 62 according to the identifier of the UE, time information correlated with a paging time point of the UE includes:
determining, according to the identifier of the UE, a paging cycle of the UE and a first current time point of a cell that is about to be accessed by the UE, where the first current time point is determined by the paging device.

It should be noted that the device provided in this embodiment of the present invention may be implemented in a hardware manner or in a software manner. This is not limited herein.

As shown in FIG. 7, FIG. 7 is a schematic structural diagram of a core network device according to an embodiment of the present invention. The core network device is capable of performing the paging function described above, and the core network device may use a general-purpose computer system structure. Specifically, the computer system may be a processor-based computer. The core network device entity includes a signal transmitter 71, a signal receiver 72, and a processor 73, and communication may be performed between the signal transmitter 71, the signal receiver 72, and the processor 73 by using a bus.

The signal transmitter 71 is configured to transmit a paging message to at least one base station in a paging area, where the paging message includes an identifier of user equipment UE paged by the core network device.

The signal receiver 72 is configured to receive a response message transmitted by the at least one base station, where the response message includes time information correlated with a paging time point of the UE and determined according to the identifier of the UE by the base station that transmits the response message, and the paging time point is a time point of receiving the paging message by the UE.

The processor 73 is configured to: according to the time information included in the response message received by the signal receiver, determine timing duration of a paging timer, and start the paging timer.

Optionally, if the time information included in the response message includes a nearest forthcoming paging time point of the UE, the determining, by the processor 73, timing duration of a paging timer specifically includes:
calculating a relative difference between the nearest forthcoming paging time point of the UE and a current time point; and
determining the timing duration of the paging timer according to a maximum relative difference obtained through calculation.

Optionally, if the time information included in the response message includes a relative difference between a nearest forthcoming paging time point of the UE and a time point of receiving the paging message by the base station that transmits the response message, the determining, by the processor 73, timing duration of a paging timer specifically includes:
determining a maximum relative difference according to the relative difference included in the received response message; and
determining the timing duration of the paging timer according to the maximum relative difference.

Optionally, if the time information included in the response message includes a relative difference interval between a nearest forthcoming paging time point of the UE and a time point of receiving the paging message by the base station that transmits the response message, the determining, by the processor 73, timing duration of a paging timer specifically includes:
determining a maximum relative difference in the relative difference interval according to the relative difference interval included in the received response message; and
determining the timing duration of the paging timer according to the maximum relative difference.

Optionally, the determining, by the processor 73, the timing duration of the paging timer according to the maximum relative difference specifically includes:
determining the maximum relative difference as the timing duration of the paging timer; or
adding a specified offset value to the maximum relative difference, and determining a value obtained after the specified offset value is added as the timing duration of the paging timer.

Optionally, if the time information included in the response message includes a paging cycle of the UE, the determining, by the processor 73, timing duration of a paging timer specifically includes:
determining a maximum paging cycle according to the paging cycle of the UE included in the received response message, where the paging cycle is used to represent a time difference between two adjacent occasions of receiving the paging message by the UE; and
determining the timing duration of the paging timer according to the maximum paging cycle.

Optionally, the determining, by the processor 73, the timing duration of the paging timer according to the maximum paging cycle specifically includes:
determining duration corresponding to the maximum paging cycle as the timing duration of the paging timer; or
adding a specified offset value to duration corresponding to the maximum paging cycle, and determining a value obtained after the specified offset value is added as the timing duration of the paging timer.

Optionally, if the time information included in the response message includes a paging cycle of the UE and a first current time point of a cell that is about to be accessed by the UE, where the first current time point is determined by the base station that transmits the response message, the determining, by the processor 73, timing duration of a paging timer specifically includes:
determining a nearest forthcoming paging time point of the UE in the base station according to the paging cycle of the UE and the first current time point of the cell that are included in the received response message, where the cell is about to be accessed by the UE and the first current time point is determined by the base station that transmits the response message, and the paging cycle is used to represent a time difference between two adjacent occasions of receiving the paging message by the UE; and
determining the timing duration of the paging timer according to the determined nearest forthcoming paging time point of the UE in the base station.

Optionally, the determining, by the processor 73, the timing duration of the paging timer according to the determined nearest forthcoming paging time point of the UE in the base station includes:
calculating a difference between the determined nearest forthcoming paging time point of the UE in the base station and a second current time point of the core network device; and
determining a maximum difference obtained through calculation as the timing duration of the paging timer.

The processor 73 may be a general-purpose central processing unit (CPU), a microprocessor, an application-specific integrated circuit (English: application-specific integrated circuit, ASIC for short), or one or more integrated circuits used to control execution of a program of the solution in the present invention.

The core network device provided in this embodiment of the present invention can accurately obtain time information correlated with a paging time point of the UE, so that a core network can properly configure timing duration of a paging timer, thereby effectively ensuring that a paging message can be transmitted to the UE before the paging timer expires, greatly enhancing a function of the paging timer during paging, avoiding repeated transmitting of the paging message from the core network device, enhancing efficiency of paging performed by the core network device, and saving air interface resources.

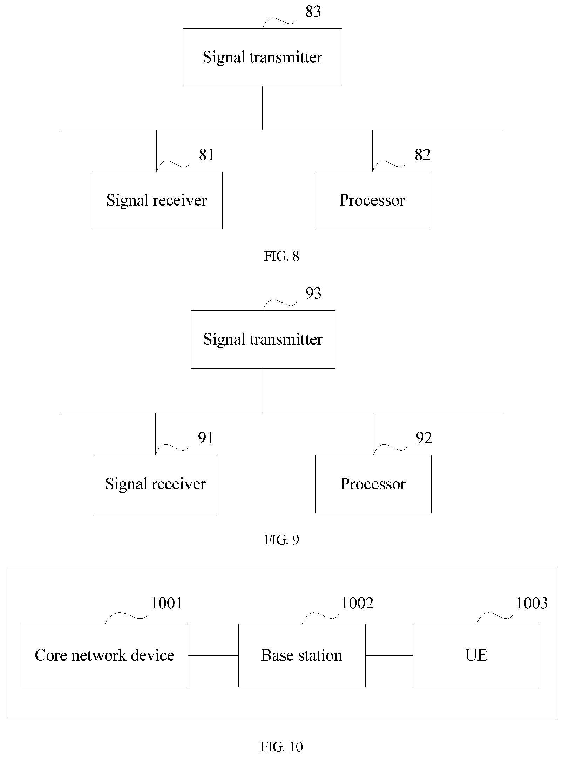

As shown in FIG. 8, FIG. 8 is a schematic structural diagram of a core network device according to an embodiment of the present invention. The core network device is capable of performing the paging function described above, and the core network device may use a general-purpose computer system structure. Specifically, the computer system may be a processor-based computer. The core network device entity includes a signal receiver 81, a processor 82, and a signal transmitter 83, and communication may be performed between the signal receiver 81, the processor 82, and the signal transmitter 83 by using a bus.

The signal receiver 81 is configured to obtain a paging cycle of paged user equipment UE, where the paging cycle is used to represent a time difference between two adjacent occasions of receiving a paging message by the UE.

The processor 82 is configured to determine timing duration of a paging timer according to the paging cycle of the UE.

The signal transmitter 83 is configured to: when downlink data arrives, trigger the processor to start the paging timer, and transmit the paging message to at least one base station in a paging area, where the paging message includes an identifier of the UE.

Optionally, the determining, by the processor 83, timing duration of a paging timer according to the paging cycle of the UE includes:
determining duration corresponding to the paging cycle as the timing duration of the paging timer; or
adding a specified offset value to duration corresponding to the paging cycle, and determining a value obtained after the specified offset value is added as the timing duration of the paging timer.

The processor 82 may be a general-purpose central processing unit (CPU), a microprocessor, an application-specific integrated circuit (English: application-specific integrated circuit, ASIC for short), or one or more integrated circuits used to control execution of a program of the solution in the present invention.

As shown in FIG. 9, FIG. 9 is a schematic structural diagram of a base station according to an embodiment of the present invention. The base station is capable of performing the paging response function described above, and the base station may use a general-purpose computer system structure. Specifically, the computer system may be a processor-based computer. The base station entity includes a signal receiver 91, a processor 92, and a signal transmitter 93, and communication may be performed between the signal receiver 91, the processor 92, and the signal transmitter 93 by using a bus.

The signal receiver 91 is configured to receive a paging message transmitted by a core network device, where the paging message includes an identifier of user equipment UE paged by the core network device.

The processor 92 is configured to: according to the identifier of the UE, determine time information correlated with a paging time point of the UE, where the paging time point is a time point of receiving the paging message by the UE.

The signal transmitter 93 is configured to transmit a response message that carries the determined time information to the core network device, where the time information is used to determine timing duration of a paging timer of the core network device.

Optionally, the determining, by the processor 92 according to the identifier of the UE, time information correlated with a paging time point of the UE includes:
determining a nearest forthcoming paging time point of the UE according to the identifier of the UE.

Optionally, the determining, by the processor 92 according to the identifier of the UE, time information correlated with a paging time point of the UE includes:
determining, according to the identifier of the UE, a relative difference between a nearest forthcoming paging time point of the UE and a time point of receiving the paging message by the base station.

Optionally, the determining, by the processor 92 according to the identifier of the UE, time information correlated with a paging time point of the UE includes:
determining, according to the identifier of the UE, a relative difference interval between a nearest forthcoming paging time point of the UE and a time point of receiving the paging message by the base station.

Optionally, the determining, by the processor 92 according to the identifier of the UE, time information correlated with a paging time point of the UE includes:
determining a paging cycle of the UE according to the identifier of the UE.

Optionally, the determining, by the processor 92 according to the identifier of the UE, time information correlated with a paging time point of the UE includes:
determining, according to the identifier of the UE, a paging cycle of the UE and a first current time point of a cell that is about to be accessed by the UE, where the first current time point is determined by the base station.

The processor 92 may be a general-purpose central processing unit (CPU), a microprocessor, an application-specific integrated circuit (English: application-specific integrated circuit, ASIC for short), or one or more integrated circuits used to control execution of a program of the solution in the present invention.

FIG. 10 is a schematic structural diagram of a paging system according to an embodiment of the present invention. The paging system includes a core network device 1001, at least one base station 1002, and UE 1003.

The core network device 1001 has a related function of a core network device described in the embodiments of the present invention. For example, the core network device 1001 transmits a paging message to at least one base station 1002 in a paging area, where the paging message includes an identifier of the UE 1003 paged by the core network device.

The core network device 1001 receives a response message transmitted by the at least one base station 1002, where the response message includes time information correlated with a paging time point of the UE and determined according to the identifier of the UE by the base station that transmits the response message, and the paging time point is a time point of receiving the paging message by the UE.

According to the time information included in the response message received by the signal receiver, the core network device 1001 determines timing duration of a paging timer, and starts the paging timer.

For another function of the core network device described in this embodiment of the present invention, reference may be made to the foregoing description, and no repeated description is given herein.

The base station 1002 has a related function of the base station described in the embodiments of the present invention. For example, the base station 1002 receives the paging message transmitted by the core network device, where the paging message includes the identifier of the user equipment UE paged by the core network device.

According to the identifier of the UE, the base station 1002 determines the time information correlated with the paging time point of the UE, where the paging time point is the time point of receiving the paging message by the UE.

The base station 1002 transmits the response message that carries the determined time information to the core network device, where the time information is used to determine the timing duration of the paging timer of the core network device.

For another function of the base station described in this embodiment of the present invention, reference may be made to the foregoing description, and no repeated description is given herein.

Persons skilled in the art should understand that the embodiments of the present invention may be provided as a method, an apparatus (device), or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the apparatus (device), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the scope of the present invention. The present invention is intended to cover these modifications and variations provided that they fall within the scope of protection defined by the following claims and their equivalent technologies.

## Claims

1. A paging device, comprising:
a receiving unit, configured to receive a paging message transmitted by a core network device, wherein the paging message comprises an identifier of user equipment, UE, paged by the core network device;
a determining unit, configured to: according to the identifier of the UE, determine time information correlated with a paging time point of the UE, wherein the paging time point is a time point of receiving the paging message by the UE; and
a transmitting unit, configured to transmit a response message that carries the determined time information to the core network device, wherein the time information is used to determine timing duration of a paging timer of the core network device;
wherein the determining, by the determining unit according to the identifier of the UE, time information correlated with a paging time point of the UE comprises:
determining, according to the identifier of the UE, a relative difference between the nearest forthcoming paging time point of the UE and a time point of receiving the paging message by the paging device.

2. The paging device according to claim 1, wherein the determining, by the determining unit according to the identifier of the UE, time information correlated with a paging time point of the UE comprises:
determining a nearest forthcoming paging time point of the UE according to the identifier of the UE.

3. The paging device according to any one of claims 1 to 2, wherein the determining, by the determining unit according to the identifier of the UE, time information correlated with a paging time point of the UE comprises:
determining, according to the identifier of the UE, a relative difference interval between the nearest forthcoming paging time point of the UE and the time point of receiving the paging message by the paging device.

4. The paging device according to any one of claims 1 to 3, wherein the determining, by the determining unit according to the identifier of the UE, time information correlated with a paging time point of the UE comprises:
determining a paging cycle of the UE according to the identifier of the UE.

5. The paging device according to any one of claims 1 to 4, wherein the determining, by the determining unit according to the identifier of the UE, time information correlated with a paging time point of the UE comprises:
determining, according to the identifier of the UE, the paging cycle of the UE and a first current time point of a cell that is about to be accessed by the UE, wherein the first current time point is determined by the paging device.

6. A paging method, comprising:
receiving, by a base station, a paging message transmitted by a core network device, wherein the paging message comprises an identifier of user equipment, UE, paged by the core network device;
determining, by the base station according to the identifier of the UE, time information correlated with a paging time point of the UE, wherein the paging time point is a time point of receiving the paging message by the UE; and
transmitting, by the base station, a response message that carries the determined time information to the core network device, wherein the time information is used to determine timing duration of a paging timer of the core network device;
wherein the determining, by the base station according to the identifier of the UE, time information correlated with a paging time point of the UE comprises:
determining, by the base station according to the identifier of the UE, a relative difference between the nearest forthcoming paging time point of the UE and a time point of receiving the paging message by the base station.

7. The paging method according to claim 6, wherein the determining, by the base station according to the identifier of the UE, time information correlated with a paging time point of the UE comprises:
determining, by the base station, a nearest forthcoming paging time point of the UE according to the identifier of the UE.

8. The paging method according to any one of claims 6 to 7, wherein the determining, by the base station according to the identifier of the UE, time information correlated with a paging time point of the UE comprises:
determining, by the base station according to the identifier of the UE, a relative difference interval between the nearest forthcoming paging time point of the UE and the time point of receiving the paging message by the base station.

9. The paging method according to any one of claims 6 to 8, wherein the determining, by the base station according to the identifier of the UE, time information correlated with a paging time point of the UE comprises:
determining, by the base station, a paging cycle of the UE according to the identifier of the UE.

10. The paging method according to any one of claims 6 to 9, wherein the determining, by the base station according to the identifier of the UE, time information correlated with a paging time point of the UE comprises:
determining, by the base station according to the identifier of the UE, the paging cycle of the UE and a first current time point of a cell that is about to be accessed by the UE, wherein the first current time point is determined by the base station.

11. A computer-readable storage medium comprising instructions which, when executed by a computer, cause the computer to carry out the method of any one of claims 6 to 10.

12. A computer program product comprising a program with instructions which, when executed by a computer, cause the computer to carry out the method of any one of claims 6 to 10.

## Patentansprüche

1. Funkrufvorrichtung, umfassend:
eine Empfangseinheit, die dazu konfiguriert ist, eine durch eine Kernnetzvorrichtung übertragene Funkrufnachricht zu empfangen, wobei die Funkrufnachricht eine Kennung eines durch die Kernnetzvorrichtung angerufenen Benutzergeräts (user equipment - UE) umfasst;
eine Bestimmungseinheit, die für Folgendes konfiguriert ist: Bestimmen von Zeitinformationen, die mit einem Funkrufzeitpunkt des UE korrelieren, gemäß der Kennung des UE, wobei es sich bei dem Funkrufzeitpunkt um einen Zeitpunkt des Empfangs der Funkrufnachricht am UE handelt; und
eine Übertragungseinheit, die dazu konfiguriert ist, eine Antwortnachricht, welche die bestimmten Zeitinformationen trägt, an die Kernnetzvorrichtung zu übertragen, wobei die Zeitinformationen verwendet werden, um eine Zeitdauer eines Funkrufzeitgebers der Kernnetzvorrichtung zu bestimmen;
wobei das Bestimmen der Zeitinformationen, die mit einem Funkrufzeitpunkt des UE korrelieren, durch die Bestimmungseinheit gemäß der Kennung des UE Folgendes umfasst:
Bestimmen einer relativen Differenz zwischen dem nächsten bevorstehenden Funkrufzeitpunkt des UE und einem Zeitpunkt des Empfangs der Funkrufnachricht an der Funkrufvorrichtung gemäß der Kennung des UE.

2. Funkrufvorrichtung nach Anspruch 1, wobei das Bestimmen von Zeitinformationen, die mit einem Funkrufzeitpunkt des UE korrelieren, durch die Bestimmungseinheit gemäß der Kennung des UE Folgendes umfasst:
Bestimmen eines nächsten bevorstehenden Funkrufzeitpunkts des UE gemäß der Kennung des UE.

3. Funkrufvorrichtung nach einem der Ansprüche 1 bis 2, wobei das Bestimmen von Zeitinformationen, die mit einem Funkrufzeitpunkt des UE korrelieren, durch die Bestimmungseinheit gemäß der Kennung des UE Folgendes umfasst:
Bestimmen eines relativen Differenzintervalls zwischen dem nächsten bevorstehenden Funkrufzeitpunkt des UE und dem Zeitpunkt des Empfangs der Funkrufnachricht an der Funkrufvorrichtung gemäß der Kennung des UE.

4. Funkrufvorrichtung nach einem der Ansprüche 1 bis 3, wobei das Bestimmen von Zeitinformationen, die mit einem Funkrufzeitpunkt des UE korrelieren, durch die Bestimmungseinheit gemäß der Kennung des UE Folgendes umfasst:
Bestimmen eines Funkrufzyklus des UE gemäß der Kennung des UE.

5. Funkrufvorrichtung nach einem der Ansprüche 1 bis 4, wobei das Bestimmen von Zeitinformationen, die mit einem Funkrufzeitpunkt des UE korrelieren, durch die Bestimmungseinheit gemäß der Kennung des UE Folgendes umfasst:
Bestimmen des Funkrufzyklus des UE und eines ersten aktuellen Zeitpunkts einer Zelle, auf die das UE in Kürze zugreifen wird, gemäß der Kennung des UE, wobei der erste aktuelle Zeitpunkt durch die Funkrufvorrichtung bestimmt wird.

6. Funkrufverfahren, umfassend:
Empfangen einer durch eine Kernnetzvorrichtung übertragenen Funkrufnachricht an einer Basisstation, wobei die Funkrufnachricht eine Kennung eines durch die Kernnetzvorrichtung angerufenen Benutzergeräts (UE) umfasst;
Bestimmen von Zeitinformationen, die mit einem Funkrufzeitpunkt des UE korrelieren, durch die Basisstation gemäß der Kennung des UE, wobei es sich bei dem Funkrufzeitpunkt um einen Zeitpunkt des Empfangs der Funkrufnachricht am UE handelt; und
Übertragen einer Antwortnachricht, welche die bestimmten Zeitinformationen trägt, an die Kernnetzvorrichtung durch die Basisstation, wobei die Zeitinformationen verwendet werden, um eine Zeitdauer eines Funkrufzeitgebers der Kernnetzvorrichtung zu bestimmen;
wobei das Bestimmen von Zeitinformationen, die mit einem Funkrufzeitpunkt des UE korrelieren, durch die Basisstation gemäß der Kennung des UE Folgendes umfasst:
Bestimmen einer relativen Differenz zwischen dem nächsten bevorstehenden Funkrufzeitpunkt des UE und einem Zeitpunkt des Empfangs der Funkrufnachricht an der Basisstation durch die Basisstation gemäß der Kennung des UE.

7. Funkrufverfahren nach Anspruch 6, wobei das Bestimmen von Zeitinformationen, die mit einem Funkrufzeitpunkt des UE korrelieren, durch die Basisstation gemäß der Kennung des UE Folgendes umfasst:
Bestimmen eines nächsten bevorstehenden Funkrufzeitpunkts des UE durch die Basisstation gemäß der Kennung des UE.

8. Funkrufverfahren nach einem der Ansprüche 6 bis 7, wobei das Bestimmen von Zeitinformationen, die mit einem Funkrufzeitpunkt des UE korrelieren, durch die Basisstation gemäß der Kennung des UE Folgendes umfasst:
Bestimmen eines relativen Differenzintervalls zwischen dem nächsten bevorstehenden Funkrufzeitpunkt des UE und dem Zeitpunkt des Empfangs der Funkrufnachricht an der Basisstation durch die Basisstation gemäß der Kennung des UE.

9. Funkrufverfahren nach einem der Ansprüche 6 bis 8, wobei das Bestimmen von Zeitinformationen, die mit einem Funkrufzeitpunkt des UE korrelieren, durch die Basisstation gemäß der Kennung des UE Folgendes umfasst:
Bestimmen eines Funkrufzyklus des UE durch die Basisstation gemäß der Kennung des UE.

10. Funkrufverfahren nach einem der Ansprüche 6 bis 9, wobei das Bestimmen von Zeitinformationen, die mit einem Funkrufzeitpunkt des UE korrelieren, durch die Basisstation gemäß der Kennung des UE Folgendes umfasst:
Bestimmen des Funkrufzyklus des UE und eines ersten aktuellen Zeitpunkts einer Zelle, auf die das UE in Kürze zugreifen wird, durch die Basisstation gemäß der Kennung des UE, wobei der erste aktuelle Zeitpunkt durch die Basisstation bestimmt wird.

11. Computerlesbares Speichermedium, das Anweisungen umfasst, die bei Ausführung durch einen Computer den Computer dazu veranlassen, das Verfahren nach einem der Ansprüche 6 bis 10 durchzuführen.

12. Computerprogrammprodukt, das ein Programm mit Anweisungen umfasst, die bei Ausführung durch einen Computer den Computer dazu veranlassen, das Verfahren nach einem der Ansprüche 6 bis 10 durchzuführen.

## Revendications

1. Dispositif de radiomessagerie, comprenant :
une unité de réception, conçue pour recevoir un message de radiomessagerie transmis par un dispositif de réseau d'infrastructure, dans lequel le message de radiomessagerie comprend un identifiant d'un équipement utilisateur, UE, contacté en radiomessagerie par le dispositif de réseau d'infrastructure ;
une unité de détermination, conçue pour : selon l'identifiant de l'UE, déterminer des informations de temps corrélées à un instant de radiomessagerie de l'UE, dans lequel l'instant de radiomessagerie est un instant de réception du message de radiomessagerie par l'UE ; et
une unité de transmission, conçue pour transmettre un message de réponse qui achemine les informations de temps déterminées au dispositif de réseau d'infrastructure, dans lequel les informations de temps sont utilisées pour déterminer une durée de temporisation d'un temporisateur de radiomessagerie du dispositif de réseau d'infrastructure ;
dans lequel la détermination, par l'unité de détermination selon l'identifiant de l'UE, d'informations de temps corrélées à un instant de radiomessagerie de l'UE comprend :
la détermination, selon l'identifiant de l'UE, d'une différence relative entre le prochain plus proche instant de radiomessagerie de l'UE et un instant de réception du message de radiomessagerie par le dispositif de radiomessagerie.

2. Dispositif de radiomessagerie selon la revendication 1, dans lequel la détermination, par l'unité de détermination selon l'identifiant de l'UE, d'informations de temps corrélées à un instant de radiomessagerie de l'UE comprend :
la détermination d'un prochain plus proche instant de radiomessagerie de l'UE selon l'identifiant de l'UE.

3. Dispositif de radiomessagerie selon l'une quelconque des revendications 1 et 2, dans lequel la détermination, par l'unité de détermination selon l'identifiant de l'UE, d'informations de temps corrélées à un instant de radiomessagerie de l'UE comprend :
la détermination, selon l'identifiant de l'UE, d'un intervalle de différence relative entre le prochain plus proche instant de radiomessagerie de l'UE et l'instant de réception du message de radiomessagerie par le dispositif de radiomessagerie.

4. Dispositif de radiomessagerie selon l'une quelconque des revendications 1 à 3, dans lequel la détermination, par l'unité de détermination selon l'identifiant de l'UE, d'informations de temps corrélées à un instant de radiomessagerie de l'UE comprend :
la détermination d'un cycle de radiomessagerie de l'UE selon l'identifiant de l'UE.

5. Dispositif de radiomessagerie selon l'une quelconque des revendications 1 à 4, dans lequel la détermination, par l'unité de détermination selon l'identifiant de l'UE, d'informations de temps corrélées à un instant de radiomessagerie de l'UE comprend :
la détermination, selon l'identifiant de l'UE, du cycle de radiomessagerie de l'UE et d'un premier instant actuel d'une cellule à laquelle l'UE est sur le point d'accéder, dans lequel le premier instant actuel est déterminé par le dispositif de radiomessagerie.

6. Procédé de radiomessagerie, comprenant :
la réception, par une station de base, d'un message de radiomessagerie transmis par un dispositif de réseau d'infrastructure, dans lequel le message de radiomessagerie comprend un identifiant d'un équipement utilisateur, UE, contacté en radiomessagerie par le dispositif de réseau d'infrastructure ;
la détermination, par la station de base selon l'identifiant de l'UE, d'informations de temps corrélées à un instant de radiomessagerie de l'UE, dans lequel l'instant de radiomessagerie est un instant de réception du message de radiomessagerie par l'UE ; et
la transmission, par la station de base, d'un message de réponse qui achemine les informations de temps déterminées au dispositif de réseau d'infrastructure, dans lequel les informations de temps sont utilisées pour déterminer une durée de temporisation d'un temporisateur de radiomessagerie du dispositif de réseau d'infrastructure ;
dans lequel la détermination, par la station de base, selon l'identifiant de l'UE, d'informations de temps corrélées à un instant de radiomessagerie de l'UE comprend :
la détermination, par la station de base selon l'identifiant de l'UE, d'une différence relative entre le prochain plus proche instant de radiomessagerie de l'UE et un instant de réception du message de radiomessagerie par la station de base.

7. Procédé de radiomessagerie selon la revendication 6, dans lequel la détermination, par la station de base selon l'identifiant de l'UE, d'informations de temps corrélées à un instant de radiomessagerie de l'UE comprend :
la détermination, par la station de base, d'un prochain plus proche instant de radiomessagerie de l'UE selon l'identifiant de l'UE.

8. Procédé de radiomessagerie selon l'une quelconque des revendications 6 et 7, dans lequel la détermination, par la station de base selon l'identifiant de l'UE, d'informations de temps corrélées à un instant de radiomessagerie de l'UE comprend :
la détermination, par la station de base selon l'identifiant de l'UE, d'un intervalle de différence relative entre le prochain plus proche instant de radiomessagerie de l'UE et l'instant de réception du message de radiomessagerie par la station de base.

9. Procédé de radiomessagerie selon l'une quelconque des revendications 6 à 8, dans lequel la détermination, par la station de base selon l'identifiant de l'UE, d'informations de temps corrélées à un instant de radiomessagerie de l'UE comprend :
la détermination, par la station de base, d'un cycle de radiomessagerie de l'UE selon l'identifiant de l'UE.

10. Procédé de radiomessagerie selon l'une quelconque des revendications 6 à 9, dans lequel la détermination, par la station de base selon l'identifiant de l'UE, d'informations de temps corrélées à un instant de radiomessagerie de l'UE comprend :
la détermination, par la station de base, selon l'identifiant de l'UE, du cycle de radiomessagerie de l'UE et d'un premier instant actuel d'une cellule à laquelle l'UE est sur le point d'accéder, dans lequel le premier instant actuel est déterminé par la station de base.

11. Support de stockage lisible par ordinateur comprenant des instructions qui, lorsqu'elles sont exécutées par un ordinateur, amènent l'ordinateur à réaliser le procédé selon l'une quelconque des revendications 6 à 10.

12. Produit-programme d'ordinateur comprenant un programme avec des instructions qui, lorsqu'elles sont exécutées par un ordinateur, amènent l'ordinateur à réaliser le procédé selon l'une quelconque des revendications 6 à 10.
